# EUROPEAN PATENT SPECIFICATION

(11) **EP 1 015 143 B1**
(45) Date of publication and mention of the grant of the patent: **27.08.2003**
(21) Application number: 98903335.2
(22) Date of filing: 06.02.1998
(51) Int. Cl.: B09C 1/06, C10B 53/00, A62D 3/00

(54) **TREATMENT OF CONTAMINATED SOIL**
BEHANDLUNG VON VERUNREINIGTEN BÖDEN
TRAITEMENT D'UN SOL CONTAMINE

(30) Priority: 06.02.1997 EP 97850018
(43) Date of publication of application: 05.07.2000
(73) Proprietor: AKZO NOBEL N.V., 6800 SB Arnhem (NL); Eka Chemicals AB, 445 80 Bohus (SE)
(72) Inventor: OLSSON, Lennart, S-445 36 Bohus (SE); ANDERSSON, Göran, S-445 34 Bohus (SE)
(74) Representative: Jönsson, Christer
(86) International application number: SE9800194
(87) International publication number: WO98034739

(56) References cited:
- EP-A- 0 245 655
- EP-A- 0 624 410
- WO-A-95/30453
- DE-A- 4 210 926
- DE-C- 4 127 506
- R. SCHMIDT: "Pyrolyseanlage reinigt kontaminierten Boden eines Kokereigeländes" WASSER, LUFT UND BODEN, vol. 33, no. 7/8, July 1989, MAINZ DE, pages 59-60, XP000074812
- C. BROADBENT: "High temperature oxidation process for decontamination of mercury containing wastes" AUFBEREITUNGS TECHNIK, vol. 35, no. 6, June 1994, WIESBADEN DE, pages 299-306, XP000513915

## Description

The present invention relates to a process for treatment of contaminated soil, comprising hazardous contaminates such as dioxins, heavy metals and other volatile substances.

Many industrial sites have contaminated soil, comprising heavy metals such as Hg, Pb, As, Cd and also dioxins, which must be treated before a possible proper deposition of the soil. A large number of processes have been suggested for treatment of contaminated soil. There are different ways to treat soil dependent on the degree of contamination and the content of the hazardous contaminates. In the case of soil contaminated by dioxins and heavy metals, the most effective process is a thermal treatment.

Thermal treatment of contaminated soil can be carried out by incineration at high temperatures, or treatment at low and moderate temperatures. In order to form a gas phase with the desorbed gaseous heavy metals, the overall treatment temperature has to exceed the temperature for phase transformation from liquid to gas. Nevertheless, it is not desirable to carry out thermal treatment at too high temperatures due to the large formation of flue gases. However, thermal treatment at low and moderate temperature is not sufficient for elimination of dioxins. Hence, the procedures of the thermal treatments are contradictory for fulfilment of the desired aim.

Pyrolysis is a known process for reducing the amount of flue gases when thermally treating soil. The heating of the furnace is preferably indirect and the furnace chamber may be sealed in order to prevent introduction of air. Known are also processes having a combination of thermal treatments at low and moderate temperatures, but they fail to provide an efficient and complete treatment of contaminated soils which comprises both dioxins and heavy metals. The known processes are either focused on elimination of dioxins or the recovery of heavy metals from the soil. The combined treatment of dioxins and heavy metals is not self evident due to the contradictory desire of eliminating dioxins while at the same time keeping the amount of flue gases at a minima.

EP-B1-245655 relates to a process for removing volatile harmful matter, such as mercury, and water from contaminated soil by thermally treating the soil, where the gas resulting from the thermal treatment is subjected to condensation to withdraw a liquid phase. The residual gases can be subjected to a low-temperature cooling to a temperature below 5°C.

WO-A1-9530453 discloses a process for removing volatile contaminants, such as dioxins, from soil or other waste material by heating in a thermal desorber, and feeding the process gas through a matrix bed to oxidise the volatilised contaminants.

EP-A1-624410 relates to a process for removal of organics and volatile metals from soil, by using thermal desorbtion. The volatilised contaminants are brought to a packed tower to produce a gas stream and a liquid.

C.P. Broadbent et al (Aufbereitungstechnik, vol. 35 (1994) no. 6. Wiesbaden) discloses a process for treating soil comprising the stages heating the soil in the range up to 900 °C forming a soil residue and a gas phase containing mercury and dioxins, removing the soil residue, further treating the gas by post combustion, quench cooling the combustion gases, and treating the residual non-condensed gas.

The instant invention is distinguished from this state of the art essentially in that a first step of quench cooling is performed on the hot combustion gases to a temperature in the range of from 100°C to 200°C and filtering the gases exiting from this first stage quench cooling step before feeding them to a second step of quench to a temperature in the range of under 30°C, this latter degree of cooling being state of the art.

With the solution according to the process of the present invention it is possible to enable the elimination of dioxins as well as keeping the amount of flue gases at a minimum, and at the same time separating heavy metals adsorbed in the contaminated soil. The process is described in the appended claims.

The solution according to the present invention provides a process for treatment of removing mercury and dioxins of contaminated soil, where said soil is treated in the following stages: i) pyrolysing the soil in a furnace at a temperature in the range of from about 450°C up to about 800°C, forming a soil residue (8) depleted of mercury and dioxins and a gas phase (7) containing mercury and dioxins, ii)) removing the soil residue depleted of mercury and dioxins from the furnace, iii) further treating the gas by post combustion at a temperature of at least about 800°C and a retention time of at least 1 second; iv) quench cooling the hot combustion gases formed in stage iii) to a temperature in the range of from about 100°C up to about 200°C and subsequently filtering the gases from said quench cooling v) recovering mercury in the gas from stage iv) in a condensation vessel which is operated at a temperature range from 2°C up to 30°C vi) treating the residual non-condensed gas from stage v) before discharge to atmosphere.

The content of dioxin in the soil may vary considerably. A typical average content of dioxins can be about 4000 nglkg dry solids.

The process according to the present invention can be used for recovering a large number of metals which are adsorbed by the soil. The process is especially suitable for treatment of soil comprising heavy metals such as Hg, dioxines and other volatile substances. Additionally, partial amounts in the soil of contaminants such as As, Pb, Cd, Cu and Zn can be reduced. The process is preferably used for recovering mercury and dioxins from contaminated soil. The content of mercury in the soil may vary considerably. A typical average content of mercury can be about 40 mg/kg dry solids.

Before subjecting the contaminated material to the pyrolytic treatment, the material is preferably subjected to a preliminary cleaning treatment Firstly, undesired material such as metal pieces and plastics may be separated. Wood and coarser stones may also be separated. Then, the soil is suitably classified and all material coarser than 80 mm separated before entering the soil into the furnace for pyrolysis. The separated wood and stones are preferablt crushed and grinded, and subsequently returned to the before mentioned classification. The removed metal pieces may be washed and deposited, and the washing water is suitably brought to a separate treatment.

After the preferred preliminary cleaning treatment, the soil is taken to a pyrolysis treatment. The furnace can be of any type preferably a continuously fed and sealed furnace. Preferably use is made of a rotating kiln. The soil can be fed into the furnace with a feed gear. Use of a furnace where the contaminated soil is transported on a belt conveyor is also possible. The furnace chamber is preferably airtight and provided with an inert gas such as nitrogen and steam Preferably the whole system is kept under slight vacuum (below atmospheric pressure) in order to avoid risks of leakage to the atmosphere. Suitably the pressure in the pyrolysis is in the range of from about 100 Pa up to about 5000 Pa. The thermal treatment is preferably carried out in substantially oxygen-free atmosphere and the heating of the furnace is preferably indirect by e.g. heating the outside wall of the furnace by liquefied petroleum gas and air, or the similar fuel. The heating may also be carried out by the use of electric power. The temperature during the pyrolysis treatment is in the range of from about 450°C up to about 800°C, suitably from about 500°C up to about 700°C and preferably from about 500°C up to about 650°C. The retention time in the pyrolysis is suitably in the range of from about 5 minutes up to about 120 minutes, preferably from about 10 minutes up to about 90 minutes, and most preferably from about 20 minutes up to about 60 minutes. By the pyrolysis process, hazardous contaminates are desorbed from the soil and forms a gas phase. Remaining is a clean soil residue. After pyrolysis the clean soil is removed, while preferably cooled, from the furnace.

The gas phase from the pyrolysis is further thermally treated in a post-combustion. The gas comprises prefereably heavy metals, dioxins, hydrocarbons, steam, dust and ashes. During post-combustion substantially all of the dioxins are thermaly decomposed. The post-combustion is suitably carried out in an oxygen-enriched atmosphere and the heating is either direct, i.e. heating with an open flame, or indirect. Liquefied petroleum gas in addition to oxygen and air, or the similar fuels, can be used for heating. The post-combustion may be carried out at a temperature of at least about 800°C and a retention time of at least 1 second. Suitably the post-combustion is carried out at a temperature of at least about 900°C and preferably at a temperature of at least about 1000°C. The upper post-combustion treatment temperature is not critical, and is only limited by process technical reasons. A suitable upper temperature limit can be set to about 1500°C. In the preferably oxygen-enriched atmosphere of the post-combustion, the content of dioxins in the gas is eliminated. Simultaneously the hydrocarbons are incinerated.

After the post-combustion, the hot combustion gases are quench cooled to a temperature in the range of from about 100°C up to about 200°C and filtered, in order to prevent the re-formation of dioxins. Re-formation of dioxins is likely in the temperature range 200-400°C. The quench cooling is suitably a rather quick operation, in order to pass said critical temperature range as fast as possible. Said quench cooling can be carried out in less than about 10 seconds and preferably in the ranqe from about 1 second up to about 10 seconds. The quench cooling is preferably carried out by injection of water into the gas, e.g. by the aid of sprinkles. Important to note is that said quench cooling is not aimed for condensation of the gas. On the contrary, the aim, is to still keep the gas substantially in the gas phase through the quench cooling stage. Preferably the quench cooling is carried out at a temperature in the range of from about 150°C up to about 200°C, suitably in the range from about 150°C up to about 180°C.

The gas from the quench cooling can be brought through a filter for separation of ashes and dust in the gas. Solid material from the filter separation can be recycled to the pyrolysis furnace. Suitably use is made of a so called bag house filter, which may contain a textile filter.

The quench cooled gases are then brought to a condensation vessel for recovering the main part of the heavy metal content in the gases. The condensing vessel is operated under a temprature range from about 2 °C to about 30 °C. The cooling surface, preferably from about 2 m² to about 30 m², can be made of one or several tubes. If necessary, a cooling device may be connected to the condensor. For the purpose of maintaining the condesing vessel free from deposits water is preferably sprayed inside the vessel. In connection to said suitable condensing vessel, a heat exchanger can be installed. In the condensation stage, heavy metals and water are condensed from the gas. In the subsequent post-treatments, the water and the heavy metals (in solid form) are separated. Another suitable recovering equipment is a wet scrubber. The wet scrubber can be in the form of a tower in which the quench cooled gases are washed by injection of water by e.g. the aid of sprinkles. The main contaminants in the gas will follow with the sprinkled water, whereafter water and solid phase of contaminants are separated. The separation is obtained preferably by centrifugation or by gravimetry. In the case of using a wet scrubber equipment, the previous mentioned optional filter for separation of ashes and dust (after the quench cooling operation) is suitably included in the same wet scrubber equipment.

The water from said recovering treatments can be brought to an outside site for further treatment, e.g. for cleaning of residual amounts of mercury dissolved in the water.

The residual non-condensed gas from the recovering stage of the gases (from the quench cooling) is further treated in order to remove mercury and dioxins before discharging the remaining gases to the atmosphere. Such treatment of gas can be carried out with filters of active carbon. In the case the gas comprises mercury, such active carbon filters adsorbs the substantial part of the remaining mercury content in the gas. The preferred active carbon filter may be added to the pyrolysis furnace after use. Of coarse, other suitable gas cleaning process equipments may be used for the treatment of the non-condensed gases. The preferred active carbon filters can also be treated with sulphur. Other filters such as selenium treated filters may also be used for the treatment of the residual non-condensed gas. A further optional treatment of the residual non-condensed gas can preferably be carried out by a zeolite treatment.

According to a possible modification of the process of the present invention, the present process for treatment of contaminated soil can advantageously also be used for regeneration of active carbon or aluminium oxide, or other contaminated material with desorbable pollutants, which may be treated along with the soil. Also sludge originating from chlorine-alkali electrolyzers can be mixed with the contaminated soil, in order to keep down the humidity and the possible mercury concentration in the material entering the furnace.

The soil treated by the present process preferably has the following maximum degree of contamination: Hg < 5mg/kg dry solids, dioxin < 200 ng/kg dry solids, and minor amounts of other volatile substances such as mineral oil, organic solvents, PCB, DDT and others. Additionally, the amount of contaminants such as As, Cd, Pb, Cu and Zn may also be reduced considerably. However, the maximum degree of contamination of Hg and dioxin are preferably held at even lower levels. The contamination of Hg can be as low as about 0.1 mg/kg dry solids, or even below. The contamination of dioxin can be as low as about 10 ng/kg dry solids, or even below. The treated soil residue can be deposited or used as land-filling material.

According to one embodiment of the present invention, a high temperature filter can be used for treatment of the gases from the pyrolysis, before carrying out the post-combustion treatment. Solid material from said high temperature filter separation can be recycled to the pyrolysis furnace.

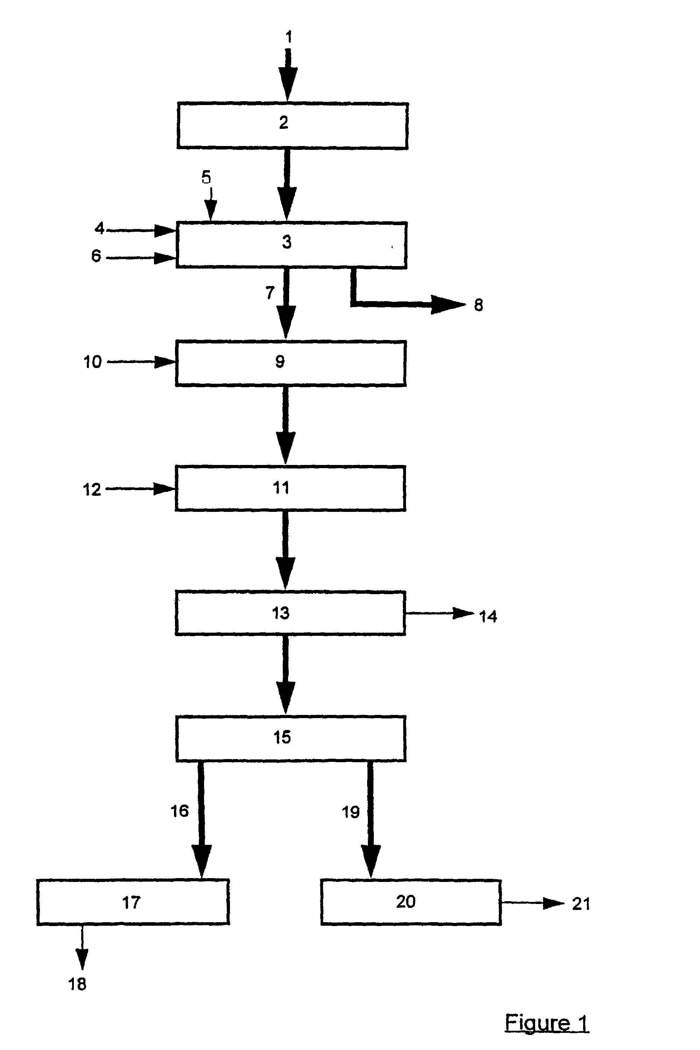

A possible mode of implementation of the invention will now be described with reference to the accompanying drawing, in which Fig. 1 is a flowchart illustrating a plant suitably for carrying out the inventive method.

Thus, Fig. 1 shows a flowchart for illustration of the preferred process stages. In a preferred process the contaminated material (1) is preferably subjected to a preliminary cleaning treatment (2), where the soil is classified and undesired material are separated. After the preliminary cleaning treatment, the soil is taken to the pyrolysis treatment (3). The fumace chamber can be provided with nitrogen gas (4) and steam (5), in order to get a sealed furnace. The furnace atmosphere is substantially oxygen-free. Preferably the whole system is kept under slight vacuum to avoid risks of leakage to the atmosphere. The heating of the furnace can be carried out by heating the outside wall of the furnace by liquefied petroleum gas (6) and air, or by electric power. In the pyrolysis process, hazardous contaminates is desorbed from the soil and forms a gas phase (7). Remaining is a clean soil residue (8). After pyrolysis the clean soil is removed from the furnace. The gas phase from the pyrolysis is further thermally treated in a post-combustion (9) stage. The heating can be direct in an open flame by heating with e.g. liquefied petroleum gas (10) and air. Oxygen may also be added. After the post-combustion, the hot combustion gases are quench cooled (11) to prevent the reformation of dioxins. The quench cooling is carried out by injection of water (12) into the gas, e.g. by the aid of sprinkles. The gas from the quench cooling can be brought through a filter (13) for separation of ashes and dust in the gas. Solid material (14) from the filter separation can be recycled to the pyrolysis furnace. The quench cooled gases are then brought to a stage for recovering (15) the main part of the heavy metal content in the gases. Heavy metals (solid) and water are recovered (16) from the gas. In post-treatments (17), the water and the heavy metals (in solid form) are separated. The water (18) can be brought to an outside site for further treatment. The residual non-condensed gas (19) in the recovering stage (15) is further treated (20) before discharging the remaining gases (21) to the atmosphere. Such treatment of gas can be carried out by using filters of active carbon.

The invention is by no means restricted to the modes of implementation described above. Also, the figures given in per cent and parts in the description and the appended claims are all by weight, unless otherwise stated.

## Claims

1. A process for removing mercury and dioxins of contaminated soil, **characterised in that** said soil is treated in the following stages:
i) pyrolysing the soil in a furnace at a temperature in the range of from 450°C up to 800°C, forming a soil residue (8) depleted of mercury and dioxins and a gas phase (7), containing mercury and dioxins,
ii) removing the soil residue depleted of mercury and dioxins from the furnace,
iii) further treating the gas by post combustion (9) at a temperature of at least 800°C and a retention time of at least 1 second,
iv) quench cooling (11) the hot combustion gases formed in stage iii) to a temperature in the range of from 100°C up to 200°C and subsequently filtering the gases from said quench cooling,
v) recovering (15) mercury in the gas from stage iv) in a condensation vessel which is operated at a temperature range from 2 °C up to 30 °C,
vi) treating the residual non-condensed gas (19) from stage v) before discharge to atmosphere (21).

2. A process as claimed in claim 1, **characterised in that** the hot combustion gases from stage iii) is quench cooled to a temperature in the range of from 150°C up to 200°C.

3. A process as claimed in claim 1, **characterised in that** the treatment by pyrolysis is carried out below atmospheric pressure.

4. A process as claimed in claim 1, **characterised in that** the retention time for the soil in the pyrolysis is in the range of from 20 minutes up to 60 minutes.

5. A process as claimed in claim 1, **characterised in that** the treatment of the residual non-condensed gas in stage vi) is carried out by the use of an active carbon filter (20).

6. A process as claimed in claim 1, **characterised in that** the treatment of the residual non-condensed gas in stage vi) is carried out by a zeolite treatment.

7. A process as claimed in claim 1, **characterised in that** the post combustion is carried out at a temperature of at least about 900°C.

## Patentansprüche

1. Verfahren zum Entfemen von Quecksilber und Dioxinen aus verunreinigtem Erdboden, **dadurch gekennzeichnet, dass** der Erdboden gemäß den folgenden Stufen behandelt wird:
(i) Pyrolysieren des Erdbodens in einem Ofen bei einer Temperatur im Bereich von 450°C bis 800°C, Bilden eines Erdbodenrückstands (8), welcher an Quecksilber und Dioxinen abgereichert ist, und einer Gasphase (7), welche Quecksilber und Dioxine enthält,
(ii) Entfernen des Erdbodenrückstands, welcher an Quecksilber und Dioxinen abgereichert ist, aus dem Ofen,
(iii) weiteres Behandeln des Gases durch Nachverbrennung (9) bei einer Temperatur von mindestens 800°C und einer Verweilzeit von mindestens 1 Sekunde,
(iv) Quenchkühlen (11) der heißen Verbrennungsgase, welche in Stufe (iii) gebildet werden, auf eine Temperatur im Bereich von 100°C bis 200°C und anschließendes Filtrieren der Gase aus dem Quenchkühlen.
(v) Wiedergewinnen (15) von Quecksilber aus dem Gas aus Stufe (iv) in einem Kondensationsgefäß, welches in einem Temperaturbereich von 2°C bis 30°C betrieben wird,
(vi) Behandeln des restlichen nichtkondensierten Gases (19) aus Stufe (v) vor der Abgabe an die Atmosphäre (21).

2. Verfahren gemäß Anspruch 1, **dadurch gekennzeichnet, dass** die heißen Verbrennungsgase aus Stufe (iii) auf eine Temperatur im Bereich von 150°C bis 200°C quenchgekühlt werden.

3. Verfahren gemäß Anspruch 1, **dadurch gekennzeichnet, dass** die Behandlung durch Pyrolyse unterhalb atmosphärischen Drucks durchgeführt wird.

4. Verfahren gemäß Anspruch 1, **dadurch gekennzeichnet, dass** die Verweilzeit des Erdbodens bei der Pyrolyse im Bereich von 20 Minuten bis 60 Minuten liegt.

5. Verfahren gemäß Anspruch 1, **dadurch gekennzeichnet, dass** die Behandlung des restlichen nichtkondensierten Gases in Stufe (vi) unter Verwendung eines Aktivkohlefilters (20) durchgeführt wird.

6. Verfahren gemäß Anspruch 1, **dadurch gekennzeichnet, dass** die Behandlung des restlichen nichtkondensierten Gases in Stufe (vi) durch eine Behandlung mit einem Zeolith durchgeführt wird.

7. Verfahren gemäß Anspruch 1, **dadurch gekennzeichnet, dass** die Nachverbrennung bei einer Temperatur von mindestens etwa 900°C durchgerührt wird.

## Revendications

1. Procédé permettant d'éliminer du mercure et des dioxines d'un sol contaminé, **caractérisé en ce que** ledit sol subit les étapes de traitement suivantes :
i) on soumet le sol à une pyrolyse dans un four; à une température de 450 à 800 °C, ce qui donne un résidu de sol (8) appauvri en mercure et en dioxines et une phase gazeuse (7) contenant du mercure et des dioxines ;
ii) on retire du four le résidu de sol appauvri en mercure et en dioxines ;
iii) on soumet ensuite le gaz à une post-combustion (9), en le maintenant à une température d'au moins 800 °C pendant au moins 1 seconde ;
iv) on refroidit brutalement (11) les gaz de combustion très chauds formés dans l'étape (iii), jusqu'à une température de 100 à 200 °C, puis on filtre les gaz provenant de ce refroidissement brutal ;
v) on récupère (15) le mercure présent dans les gaz provenant de l'étape (iv), dans un récipient de condensation où l'on fait régner une température de 2 à 30 °C ;
vi) et l'on traite les résidus de gaz non-condensés (19) provenant de l'étape (v), avant de les évacuer dans l'atmosphère (21).

2. Procédé conforme à la revendication 1, **caractérisé en ce que** les gaz de combustion très chauds provenant de l'étape (iii) sont refroidis brutalement jusqu'à une température de 150 à 200 °C.

3. Procédé conforme à la revendication 1, **caractérisé en ce que** le traitement de pyrolyse est effectué sous une pression inférieure à la pression atmosphérique.

4. Procédé conforme à la revendication 1, **caractérisé en ce que** la durée pendant laquelle le sol est soumis à la pyrolyse vaut de 20 à 60 minutes.

5. Procédé conforme à la revendication 1, **caractérisé en ce que** l'on effectue l'étape (vi) de traitement des résidus de gaz non-condensés à l'aide d'un filtre (20) à charbon actif.

6. Procédé conforme à la revendication 1, **caractérisé en ce que** l'on effectue l'étape (vi) de traitement des résidus de gaz non-condensés à l'aide d'une zéolithe.

7. Procédé conforme à la revendication 1, **caractérisé en ce que** l'on effectue la post-combustion à une température d'au moins 900 °C environ.
